(19) Europäisches Patentamt
European Patent Office
Office européen des brevets

(11) Veröffentlichungsnummer: **0 010 741**
**B1**

(12) # EUROPÄISCHE PATENTSCHRIFT

(45) Veröffentlichungstag der Patentschrift: **28.07.82**

(51) Int. Cl.³: **C 08 F 10/00**, C 08 F 4/64

(21) Anmeldenummer: **79104149.4**

(22) Anmeldetag: **26.10.79**

(54) **Verfahren zum Herstellen von Homo- und Copolymerisaten von alpha-Monoolefinen.**

(30) Priorität: **03.11.78 DE 2847757**

(43) Veröffentlichungstag der Anmeldung: **14.05.80 Patentblatt 80/10**

(45) Bekanntmachung des Hinweises auf die Patenterteilung: **28.07.82 Patentblatt 82/30**

(84) Benannte Vertragsstaaten: **AT BE DE FR GB IT**

(56) Entgegenhaltungen:
**DE-A-2 603 920**
**DE-A-2 742 586**
**JP-A-26 000 487**
**US-A-3 380 961**
**CHEMICAL ABSTRACTS, Vol. 89, Nr. 16, 16. Oktober 1978, Seite 19, Nr. 130178n Columbus, Ohio, U.S.A. & JP -A-7800277 (SHOWA DENKO K.K.) 05-01-1978**

(73) Patentinhaber: **BASF Aktiengesellschaft, Carl-Bosch-Strasse 38, D-6700 Ludwigshafen (DE)**

(72) Erfinder: **Bachl, Robert, Dr., Parsevalstrasse 16, D-6520 Worms (DE)**
Erfinder: **Frielingsdorf, Hans, Dr., Auf dem Koeppel 4, D-6702 Bad Duerkheim (DE)**
Erfinder: **Hoehr, Lothar, Dr., Giselherstrasse 14, D-6520 Worms (DE)**
Erfinder: **Schweier, Guenther, Dr., Mundenheimer Strasse 148, D-6700 Ludwigshafen (DE)**
Erfinder: **Staiger, Gerhard, Dr., Virchowstrasse 26, D-6712 Bobenheim-Roxheim (DE)**

**EP 0 010 741 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Verfahren zum Herstellen von Homo- und Copolymerisaten von α-Monoolefinen

Die vorliegende Erfindung liegt im Rahmen eines Verfahrens zum Herstellen von Homo- und Copolymerisaten von $C_2$- bis $C_6$-α-Monoolefinen durch Polymerisation des bzw. der Monomeren bei Temperaturen von 30 bis 200 °C und Drücken von 0,1 bis 200 bar mittels eines Ziegler-Katalysatorsystems aus

(1) einer Titan enthaltenden Katalysatorkomponente und

(2) einer Metallverbindung der allgemeinen Formel

$$Me\ A_{m-n}\ X_n,$$

worin stehen

Me für die Metalle Aluminium, Magnesium bzw. Zink,

A für einen $C_1$- bis $C_{12}$-Kohlenwasserstoffrest,

X für Chlor, Brom, Jod bzw. Wasserstoff,

m für die Zahl der Wertigkeit des Metalls Me, und

n für eine Zahl von 0 bis m-1,

mit der Massgabe, dass das Atomverhältnis Titan aus der Katalysatorkomponente (1) : Metall (Me) aus der Katalysatorkomponente (2) im Bereich von 1 : 0,1 bis 1 : 500 liegt.

Polymerisationsverfahren dieser Art sind in einer Vielzahl von Ausgestaltungen bekannt. Eine mit Vorteilen verbundene, an Varianten reiche Ausgestaltung ist in der deutschen Offenlegungsschrift 26 03 920 beschrieben; – wobei im Zusammenhang mit der vorliegenden Erfindung besonders die Variante interessiert, die dadurch charakterisiert ist, dass als Titan enthaltende Katalysatorkomponente (1) eingesetzt wird das festphasige Produkt P, das erhalten worden ist, indem man

(a) einen feinteiligen, porösen, anorganisch-oxidischen Stoff (I), der einen Teilchendurchmesser von 1 bis 1.000 µm, ein Porenvolumen von 0,3 bis 3 $cm^3/g$ sowie eine Oberfläche von 100 bis 1.000 $m^2/g$ besitzt und die Formel $SiO_2 \cdot aAl_2O_3$ – worin a steht für eine Zahl im Bereich von 0 bis 2 – hat, und

(b) eine Lösung (II), wie sie sich ergibt beim Zusammenbringen von

(IIa) 100 Gewichtsteilen eines Alkohols der allgemeinen Formel

$$Z\text{–}OH,$$

worin Z steht für einen gesättigten $C_1$- bis $C_8$-Kohlenwasserstoffrest,

(IIb) 0,01 bis 6 Gewichtsteilen (gerechnet als Titan) eines Titantrihalogenids, wobei das Halogen Chlor und/oder Brom sein kann, sowie

(IIc) 0,01 bis 4 Gewichtsteilen (gerechnet als Magnesium) einer in dem Alkohol (IIa) löslichen Magnesiumverbindung aus der Reihe der

(A) Magnesiumalkoholate mit den Formeln

$$Mg(OD)_2,$$

$$MgX(OD)\ \text{bzw.}$$

$$Mg_w[E_{k \cdot x}(OD)_y]_z,$$

worin stehen

D für einen einwertigen $C_1$- bis $C_{10}$-Kohlenwasserstoffrest gesättigt-aliphatischer und/oder aromatischer Natur,

X für Chlor, Brom oder Jod,

E für das Element Lithium, Bor, Aluminium oder Titan,

w für eine ganze Zahl im Bereich von 1 bis 6,

k für die Zahl der Wertigkeit des Elements E,

x für eine ganze Zahl im Bereich von 1 bis 4,

y für k.x + 1

1 für eine ganze Zahl im Bereich von 1 bis 5, und

z für 2w:(y-k.x);

oder

(B) Magnesiumcarboxylate mit der Formel

$$Mg(OCOD')_2,$$

worin

D' steht für einen einwertigen $C_1$- bis $C_{18}$-Kohlenwasserstoffrest gesättigt-aliphatischer und/oder aromatischer Natur;

oder

(C) Magensiumsalze von CH-aciden Verbindungen,

miteinander in Berührung bringt unter Bildung einer Suspension (III), mit der Massgabe, dass das Gewichtsverhältnis anorganisch-oxidischer Stoff (I) : Titan in dem Titantrihalogenid (IIb) im Bereich von 1 : 0,01 bis 1 : 0,2 und das Gewichtsverhältnis anorganisch-oxidischer Stoff (I) : Magnesium in der Magnesiumverbindung (IIc) im Bereich von 1 : 0,01 bis 1 : 0,25 liegt; und die Suspension (III) bei einer Temperatur, die unterhalb von 200 °C und oberhalb des Schmelzpunktes des verwendeten Alkohols (IIa) liegt, bis zur trockenen Konsistenz – Bildung des festphasigen Produktes P – eindampft.

Die Aufgabenstellung die zur vorliegenden Erfindung geführt hat, war, die geschilderte Variante des eingangs definierten Verfahrens so weiter zu entwicklen, dass sich ein zusätzlicher technischer Fortschritt ergibt, insbesondere ein Fortschritt, der sich u.a. darin äussert, dass im Zuge der Polymerisation Polymerisate mit weiter verbesserten morphologischen Eigenschaften – etwa im Schüttgewicht und in der Rieselfähigkeit – erhältlich werden.

Es wurde gefunden, dass die gestellte Aufgabe gelöst werden kann, wenn man das oben beschriebene festphasige Produkt P in bestimmter Weise mit bestimmten Acylhalogeniden behandelt und das dabei resultierende – wiederum festphasige – Produkt als Titan enthaltende Katalysatorkomponente (1) einsetzt.

Gegenstand der vorliegenden Erfindung ist dementsprechend ein Verfahren zum Herstellen von Homo- und Copolymerisaten von $C_2$- bis $C_6$-α-Monoolefinen durch Polymerisation des bzw. der Monomeren bei Temperaturen von 30 bis

200 °C und Drücken von 0,1 bis 200 bar mittels eines Ziegler-Katalysatorsystems aus

(1) einer Titan enthaltenden Katalysatorkomponente und

(2) einer Metallverbindung der allgemeinen Formel

$$Me\ A_{m-n}\ X_n,$$

worin stehen

Me für die Metalle Aluminium, Magnesium bzw. Zink, vorzugsweise Aluminium,

A für einen $C_1$- bis $C_{12}$-Kohlenwasserstoffrest, vorzugsweise einen $C_1$- bis $C_{12}$-Alkylrest, und insbesondere einen $C_2$- bis $C_8$-Alkylrest,

X für Chlor, Brom, Jod bzw. Wasserstoff, vorzugsweise Chlor bzw. Wasserstoff,

m für die Zahl der Wertigkeit des Metalls Me, und

n für eine Zahl von 0 bis m-1, vorzugsweise eine Zahl von 0 bis 1, und insbesondere die Zahl 0, mit der Massgabe, dass das Atomverhältnis Titan aus der Katalysatorkomponente (1) : Metall (Me) aus der Katalysatorkomponente (2) im Bereich von 1 : 0,1 bis 1 : 500, vorzugsweise 1 : 0,2 bis 1 : 200, liegt. Das erfindungsgemässe Verfahren ist dadurch gekennzeichnet, dass als Titan enthaltende Katalysatorkomponente (1) eingesetzt wird das festphasige Produkt (VI), das erhalten worden ist, indem man zunächst

(1.1) in einer ersten Stufe

(1.1.1) einen feinteiligen, porösen, anorganisch-oxidischen Stoff (I), der einen Teilchendurchmesser von 1 bis 1.000, vorzugsweise 1 bis 400 µm, ein Porenvolumen von 0,3 bis 3, vorzugsweise 1 bis 2,5 $cm^3/g$ sowie eine Oberfläche von 100 bis 1.000, vorzugsweise 200 bis 400 $m^2/g$ besitzt und die Formel $SiO_2 \cdot aAl_2O_3$ – worin a steht für eine Zahl im Bereich von 0 bis 2, insbesondere 0 bis 0,5 – hat, und

(1.1.2) eine Lösung (II), wie sie sich ergibt beim Zusammenbringen von

(IIa) 100 Gewichtsteilen eines Alkohols der allgemeinen Formel

$$Z{-}OH,$$

worin Z steht für einen gesättigten $C_1$- bis $C_8$-Kohlenwasserstoffrest, vorzugsweise einen gesättigten $C_1$- bis $C_6$-Kohlenwasserstoffrest, und insbesondere einen $C_1$- bis $C_4$-Alkylrest.

(IIb) 0,01 bis 6, vorzugsweise 0,04 bis 3,5 Gewichtsteilen (gerechnet als Titan) eines Titantrihalogenids, wobei das Halogen Chlor und/oder Brom sein kann, vorzugsweise eines Titantrichlorids, sowie

(IIc) 0,01 bis 4, vorzugsweise 0,04 bis 2,5 Gewichtsteilen (gerechnet als Magnesium) einer in dem Alkohol (IIa) löslichen Magnesiumverbindung aus der Reihe der

(A) Magnesiumalkoholate mit den Formeln

$$Mg(OD)_2,$$

$$MgX(OD)\text{ bzw.}$$

$$Mg_w\,[E_{k.x}(OD)_y]_z,$$

worin stehen

D für einen einwertigen $C_1$- bis $C_{10}$-Kohlenwasserstoffrest gesättigt-aliphatischer und/oder aromatischer Natur, vorzugsweise einen einwertigen $C_1$- bis $C_6$-Kohlenwasserstoffrest gesättigt-aliphatischer Natur, und insbesondere einen $C_1$- bis $C_4$-Alkylrest,

X für Chlor, Brom oder Jod, insbesondere Chlor,

E für das Element Lithium, Bor, Aluminium oder Titan, insbesondere Aluminium,

w für eine ganze Zahl im Bereich von 1 bis 6, insbesondere 1 bis 4,

k für die Zahl der Wertigkeit des Elements E,

x für eine ganze Zahl im Bereich von 1 bis 4, insbesondere 1 bis 2,

y für k.x. + 1

1 für eine ganze Zahl im Bereich von 1 bis 5, insbesondere 1 bis 3, und

z für 2w:(y-k.x);

oder

(B) Magnesiumcarboxylate mit der Formel

$$Mg(OCOD')_2$$

worin D' steht für einen einwertigen $C_1$- bis $C_{18}$-Kohlenwasserstoffrest gesättigt-aliphatischer und/oder aromatischer Natur, vorzugsweise einen einwertigen $C_1$- bis $C_6$-Kohlenwasserstoffrest gesättigt-aliphatischer Natur, und insbesondere einen $C_1$- bis $C_4$-Alkylrest;

oder

(C) Magnesiumsalze von CH-aciden Verbindungen,

miteinander in Berührung bringt unter Bildung einer Suspension (III), mit der Massgabe, dass das Gewichtsverhältnis anorganisch-oxidischer Stoff (I) : Titan in dem Titantrihalogenid (IIb) im Bereich von 1 : 0,01 bis 1 : 0,2, vorzugsweise von 1 : 0,03 bis 1 : 0,15, und das Gewichtsverhältnis anorganisch-oxidischer Stoff (I) : Magnesium in der Magnesiumverbindung (IIc) im Bereich von 1 : 0,01 bis 1 : 0,25, vorzugsweise von 1 : 0,03 bis1 : 0,15 liegt; die Suspension (III) bei einer Temperatur, die unterhalb von 200, vorzugsweise unterhalb von 160 °C und oberhalb des Schmelzpunktes des verwendeten Alkohols (IIa) liegt, bis zur trockenen Konsistenz – Bildung eines festphasigen Zwischenproduktes (IV) – eindampft, und dann

(1.2) in einer zweiten Stufe

(1.2.1) das aus Stufe (1.1) erhaltene festphasige Zwischenprodukt (IV) und

(1.2.2) ein – gegebenenfalls und vorzugsweise in einem organischen Lösungsmittel gelöstes – Acylhalogenid (V) der allgemeinen Formel

$$D''{-}CO{-}X$$

worin stehen

D'' für einen gesättigten $C_1$- bis $C_{18}$-Kohlenwasserstoffrest, vorzugsweise einen gesättigten $C_1$- bis $C_8$-Kohlenwasserstoffrest, und insbesondere einen $C_1$- bis $C_4$-Alkylrest oder den Phenylrest, –

mit der M· sgabe, dass in den genannten Resten bis zu 3, i· sbesondere bis zu 2 Wasserstoffatome durch Cl bzw. Br, vorzugsweise Cl substituiert sein können – und

X für F, Cl, Br bzw. J, vorzugsweise Cl bzw. Br und insbesondere Cl,

miteinander in Berührung bringt unter Bildung einer Suspension, mit der Massgabe, dass das Molverhältnis Titan aus dem festphasigen Zwischenprodukt (IV) : Acylhalogenid (V) im Bereich von 1 : 0,01 bis 1 : 100, vorzugsweise 1 : 0,05 bis 1: 80, und insbesondere im Bereich von 1 : 0,1 bis 1: 50 liegt; – wobei das dabei als Suspendiertes resultierende festphasige Produkt (VI) die Titan enthaltende Katalysatorkomponente (1) ist.

Zu dem erfindungsgemässen Verfahren ist im einzelnen das Folgende zu bemerken:

Das Polymerisationsverfahren als solches kann – unter Beachtung der kennzeichnenden Besonderheiten – praktisch in allen einschlägig üblichen technologischen Ausgestaltungen durchgeführt werden, etwa als diskontinuierliches, taktweises oder kontinuierliches Verfahren, sei es z.B. als Suspensions-Polymerisationsverfahren, Lösungs-Polymerisationsverfahren oder Trockenphasen-Polymerisationsverfahren. Die erwähnten technologischen Ausgestaltungen – mit anderen Worten: die technologischen Varianten der Polymerisation von Olefinen nach Ziegler – sind aus der Literatur und Praxis wohlbekannt, so dass sich nähere Ausführungen zu ihnen erübrigen. Zu bemerken ist allenfalls noch, dass die neue Titan enthaltende Katalysatorkomponente (1) – wie entsprechende bekannte Katalysatorkomponenten – z.B. ausserhalb oder innerhalb des Polymerisationsgefässes mit der Katalysatorkomponente (2) zusammengebracht werden kann; im letztgenannten Fall etwa durch räumlich getrennten Eintrag der Komponenten, die im übrigen in Form einer Suspension (Katalysatorkomponente (1)) bzw. Lösung (Katalysatorkompenente (2)) gehandhabt werden können. Auch ist es z.B. möglich, die Katalysatorkomponente (1) oder die vereinigten Katalysatorkomponenten (1) und (2) in Form von Partikeln einzusetzen, die mit einer Umhüllung aus Wachs versehen sind; – eine Arbeitsweise, die beim Trockenphasen-Polymerisationsverfahren von Vorteil sein kann.

Zu der neuen Titan enthaltenden Katalysatorkomponente (1) selbst ist das Folgende zu sagen:

Ihre Herstellung erfolgt in zwei Stufen, die oben sowie nachstehend mit (1.1) und (1.2) bezeichnet sind.

In der ersten Stufe (1.1) bringt man einen feinteiligen anorganisch-oxidischen Stoff (I) der oben definierten Art und eine bestimmte, oben definierte Lösung (II) miteinander in Berührung, wobei sich eine Suspension (III) bildet, die bis zur trockenen Konsistenz – Bildung eines festphasigen Zwischenproduktes (IV) – eingedampft wird. In der zweiten Stufe (1.2) wird letzteres mit einem bestimmten, oben definierten Acylhalogenid (V) in Berührung gebracht unter neuerlicher Bildung einer Suspension; wobei das dabei als Suspendiertes resultierende festphasige Produkt (VI) die neue Katalysatorkomponente (1) ist.

Im einzelnen kann man dabei wie folgt verfahren:

Stufe (1.1)

Der anorganisch-oxidische Stoff (I) wird als Substanz oder in einem Alkohol suspendiert (zweckmässigerweise einem Alkohol wie er unter (IIa) definiert ist und mit einem Feststoffgehalt der Suspension von nicht weniger als 5 Gewichtsprozent) mit der Lösung (II) vereinigt. Es ist günstig, nach der Vereinigung das Ganze während einer Zeitspanne von 5 bis 120, insbesondere 20 bis 90 Minuten auf einer Temperatur von 10 bis 160, insbesondere 20 bis 120 °C zu halten und erst danach die gebildete Suspension (III) einzudampfen.

Das Herstellen der Lösung (II) selbst kann so erfolgen, wie man üblicherweise Lösungen herstellt und ist insoweit nicht mit Besonderheiten verbunden. Als arbeitstechnisch zweckmässig hat sich erwiesen, die Lösung (II) herzustellen durch Vereinigung einer Lösung aus dem Alkohol (IIa) und dem Titantrihalogenid (IIb) mit einer Lösung aus dem Alkohol (IIa) und der Magnesiumverbindung (IIc).

Als abschliessende Massnahme bei Stufe (1.1) wird die Suspension (III) bis zur trockenen Konsistenz eingedampft, wobei das festphasige Zwischenprodukt (IV) erhalten wird. Hierbei kann man – unter Einhaltung der oben gegebenen Temperaturbedingungen – so verfahren, wie man üblicherweise Suspensionen schonend eindampft. Dies bedeutet, dass es im allgemeinen zweckmässig – und bei relativ hohen Alkoholen (IIa) u.U. unerlässlich – ist, dass Eindampfen unter mehr oder minder stark erniedrigtem Druck vorzunehmen. Als Faustregel git, dass man das Paar Temperatur/Druck so wählen sollte, dass der Eindampfvorgang nach etwa 1 bis 10 Stunden beendet ist. Zweckmässig ist es auch, das Eindampfen unter steter Wahrung der Homogenität des behandelten Gutes vorzunehmen; – wofür sich z.B. Rotationsverdampfer bewährt haben. Eine verbleibende Restmenge an Alkohol, etwa eine durch Komplexbildung gebundene Menge, ist für das festphasige Zwischenprodukt (IV) im allgemeinen ohne Schaden.

Stufe (1.2)

Man bereitet zunächst in getrennten Ansätzen eine 5- bis 30-, vorzugsweise eine rund 20-gewichtsprozentige Suspension des festphasigen Zwischenprodukts (IV) sowie eine 5- bis 80-, vorzugsweise eine rund 20-gewichtsprozentige Lösung des Acylhalogenids (V), wobei als Suspensions- bzw. Lösungsmittel insbesondere Kohlenwasserstoffe, vor allem relativ leichtsiedende Alkan-Kohlenwasserstoffe, wie Hexane oder Benzine, in Betracht kommen. Danach vereinigt man die Suspension und die Lösung in solchen Mengenverhältnissen, dass das gewünschte Gewichtsverhältnis erreicht wird. Zur Vereinigung wird man im allgemeinen die Lösung in die Suspension unter Rühren einbringen, denn diese Verfahrensweise ist praktischer als die – ebenfalls mögliche –

umgekehrte. Bei Temperaturen von 10 bis 100 °C, insbesondere bei Temperaturen von 20 bis 60 °C, ist innerhalb einer Zeitspanne von 30 bis 600 Minuten, insbesondere 120 bis 300 Minuten, die Bildung des – als Suspendiertes vorliegenden – festphasigen Produktes (VI) erfolgt. Dieses kann unmittelbar in Form der erhaltenen Suspension – gegebenenfalls nach einer Wäsche durch Digerieren – als Titan enthaltende Katalysatorkomponente verwendet werden. Es ist aber ebenso möglich, das festphasige Produkt (VI) zu isolieren und dann erst als Katalysatorkomponente einzusetzen; – wobei sich zum Isolieren z.B. der folgende Weg anbietet: Man trennt das Produkt (VI) von der flüssigen Phase mittels Filtration und wäscht es mit reiner Flüssigkeit (etwa der Art, die man auch als Suspensions- bzw. Lösungsmittel verwendet hat), worauf man es trocknet, etwa im Vakuum. – Eine für Stufe (1.2) ebenfalls mögliche, wenn auch weniger angenehme Arbeitsweise besteht darin, statt der oben erwähnten Lösung des Acylhalogenids in entsprechender Weise das Acylhalogenid als solches zu verwenden.

Die neuen Titan enthaltenden Katalysatorkomponenten (1), d.h. die festphasigen Produkte (VI), lassen sich im Rahmen des eingangs definierten Polymerisationsverfahrens zum Herstellen der dort genannten Polymerisate so einsetzen, wie man üblicherweise die Titan enthaltenden Katalysatorkomponenten (1) bei der Polymerisation von Olefinen nach Ziegler einsetzt. Insoweit sind also beim erfindungsgemässen Verfahren keine Besonderheiten gegeben, und es kann auf die aus Literatur und Praxis wohlbekannten Einsatzweisen verwiesen werden. – Es ist lediglich noch zu sagen, dass das Verfahren sich vornehmlich zum Herstellen von Homopolymerisaten des Äthylens eignet und dass im Falle des Herstellens von Copolymerisaten des Äthylens mit höheren α-Monoolefinen oder des Herstellens von Homopolymerisaten von höheren α-Monoolefinen vor allem Propen, Buten-1, 4-Methylpenten-1 und Hexen-1 als α-Monoolefine in Betracht kommen. Die Regelung der Molekulargewichte der Polymerisate kann in einschlägig üblicher Weise erfolgen, insbesondere mittels Wasserstoff als Regulans.

Was die stoffliche Seite der neuen Titan enthaltenden Katalysatorkomponenten (1) betrifft, ist im einzelnen noch das Folgende zu sagen:

Der in Stufe (1.1) einzusetzende anorganisch-oxidische Stoff (I) wird im allgemeinen ein Alumosilikat oder – insbesondere – ein Siliciumdioxid sein; wichtig ist, dass der Stoff die geforderten Eigenschaften besitzt und möglichst trocken ist (nach 6 Stunden bei einer Temperatur von 160 °C und einem Druck von 20 Torr kein Gewichtsverlust mehr). Besonders gut geeignete anorganisch-oxidische Stoffe sind solche, die gemäss der ersten Stufe (1) des in der DT-OS 24 11 735 beschriebenen Verfahrens erhalten werden, insbesondere dann, wenn dabei von Hydrogelen ausgegangen wird, die nach dem in der DT-OS 21 03 243 beschriebenen Verfahren erhalten werden.

Die einzusetzenden Alkohole (IIa) können z.B. sein: Methanol, Äthanol, Propanole sowie Butanole. Als besonders gut geeignet haben sich erwiesen z.B. Methanol, Äthanol, Isopropanol sowie n-Butanol. Die Alkohole (IIa) können eingesetzt werden in Form von Einzelindividuen sowie Gemischen aus zwei oder mehr Einzelindividuen.

Das einzusetzende Titantrihalogenid (IIb) kann ein bei Ziegler-Katalysatorsystemen übliches sein, z.B. ein bei der Reduktion eines Titantetrahalogenids mittels Wasserstoff, Aluminium oder aluminiumorganischen Verbindungen erhaltenes Reaktionsprodukt. Als besonders gut geeignet haben sich erwiesen z.B. Trichloride der Formel $TiCl_3$, wie sie bei der Reduktion von Titantetrachlorid mittels Wasserstoff anfallen sowie Trichloride der Formel $TiCl_3 \cdot \frac{1}{3} AlCl_3$, wie sie bei der Reduktion von Titantetrachlorid mittels metallischem Aluminium anfallen. Die Titantrihalogenide können eingesetzt werden in Form von Einzelindividuen sowie Gemischen aus zwei oder mehr Einzelindividuen.

Die ebenfalls in Stufe (1.1) einzusetzende Magnesiumverbindung (IIc) ist eine Verbindung aus der folgenden Reihe

(A) Ein Magnesiumalkoholat mit der oben definierten Formel

$$(A_1)\ Mg(OD)_2,$$

$$(A_2)\ MgX(OD)\ \text{bzw.}$$

$$(A_3)\ Mg_w[E_{k.x}(OD)_y]_z.$$

In ihrer Eignung für den erfindungsgemässen Zweck stehen im allgemeinen die Alkoholate der Art ($A_1$) an der Spitze, gefolgt von den Alkoholaten der Art ($A_3$) und dann den Alkoholaten der Art ($A_2$).

Beispiele für gut geeignete Individuen der Art ($A_1$) sind Magnesiummethylat, -äthylat, -n-propylat, -i-propylat, -cyclohexylat sowie -phenolat. Besonders gut geeignet sind Magnesiummethylat sowie -äthylat.

Beispiele für geeignete Individuen der Art ($A_2$) sind Magnesiumäthylat-chlorid sowie -bromid.

Beispiele für gut geeignete Individuen der Art ($A_3$) sind die Alkoholate der Formeln $Mg_3[Al(OC_2H_5)_6]_2$ $Mg[Al(OC_2H_5)_4]_2$, $Mg[Ti(OC_3H_7)_6]$, $Mg[Li_2(OC_3H_7)_4]$ sowie $Mg[B(OC_2H_5)_4]_2$. Hiervon sind die beiden erstbezeichneten besonders gut geeignet.

(B) Ein Magnesiumcarboxylat mit der oben definierten Formel

$$Mg(OCOD')_2.$$

Geeignete Individuen hiervon sind Magnesiumacetat, -propionat, -stearat sowie -benzoat, wobei das Acetat zu bevorzugen ist.

(C) Ein Magnesiumsalz einer CH-aciden Verbindung, z.B. ein solches, wie es in den ausgelegten Unterlagen des belgischen Patents 823 220 beschrieben ist. Typische gut geeignete Vertreter hiervon sind Magnesiumacetylacetonat sowie Magnesiumacetessigsäureäthylester.

Die Magnesiumverbindungen (IIc) können ein-

gesetzt werden in Form von Einzelindividuen oder Gemischen aus zwei und mehr Einzelindividuen.

Zu den in Stufe (1.2) einzusetzenden Acylhalogeniden (V) ist zu sagen, dass unter dem Begriff «gesättigter Kohlenwasserstoffrest» Kohlenwasserstoffreste verstanden werden, die alkanische und/oder aromatische Kohlenstoff-Kohlenstoff-Bindungen aufweisen. An geeigneten Individuen sind beispielsweise zu nennen: Acetylchlorid, Acetylbromid, n-Propionylchlorid, n-Butyrylchlorid, Monochloracetylchlorid, Dichloracetylchlorid, Benzoylchlorid und Phenylacetylchlorid. Hiervon zu bevorzugen sind Acetylchlorid, Monochloracetylchlorid und Benzoylchlorid.

Die Acylhalogenide (V) können eingesetzt werden in Form von Einzelindividuen sowie Gemischen aus zwei oder mehr Einzelindividuen.

Die Katalysatorkomponente (2) betreffend ist zu sagen, dass sich hierfür die einschlägig üblichen Verbindungen eignen; als geeignete Individuen sind z.B. zu nennen das $Al(C_2H_5)_3$, $Al(i\text{-}C_4H_9)_3$, $Al(n\text{-}C_4H_9)_3$, $Al(C_8H_{17})_3$ und Isoprenylaluminium.

Abschliessend ist noch zu bemerken, dass die erfindungsgemässen Titan enthaltenden Katalysatorkomponenten (1), d.h. die Produkte (VI) empfindlich gegen hydrolytische sowie oxidative Einflüsse sind. Insoweit sollte man beim Umgang mit diesen Substanzen also für die Ziegler-Katalysatoren einschlägig üblichen Vorsichtsmassnahmen treffen (z.B. Feuchtigkeitsausschluss, Inertgasatmosphäre).

**Beispiel 1**

Herstellen der Titan enthaltenden Katalysatorkomponente (1):

Stufe (1.1)

Es wird ausgegangen von einer Suspension aus 1.000 Gewichtsteilen Siliciumdioxid ($SiO_2$, Teilchendurchmesser: 40 bis 150 µm, Porenvolumen: 1,9 $cm^3/g$, Oberfläche: 350 $m^2/g$) in 3.000 Gewichtsteilen Methanol. Diese Suspension wird mit einer Lösung von 150 Gewichtsteilen $TiCl_3 \cdot \frac{1}{3}$-$AlCl_3$ und 312 Gewichtsteilen Magnesiumäthylat in 4.000 Gewichtsteilen Methanol vereinigt. Man rührt die erhaltene Suspension 60 Minuten bei einer Temperatur von 40 °C und isoliert anschliessend das gebildete festphasige Zwischenprodukt (IV) durch Abtreiben der flüchtigen Bestandteile in einem Rotationsverdampfer, der bis zu einem Betriebsdruck von 20 Torr und einer Betriebstemperatur von 85 °C gebracht wird. Die Analyse des erhaltenen Zwischenproduktes (IV) ergibt einen Gehalt an Titan von 2,38 Gewichtsprozent und an Chlor von 7,1 Gewichtsprozent.

Stufe (1.2)

10 Gewichtsteile des in Stufe (1.1) gewonnenen festphasigen Zwischenproduktes (IV) werden in 50 Gewichtsteilen Heptan suspendiert, worauf diese Suspension bei einer Temperatur von 25 °C mit einer Lösung aus 3,3 Gewichtsteilen Acetylchlorid in 20 Gewichtsteilen Heptan versetzt und das ganze 4 Stunden bei der genannten Temperatur gerührt wird. Anschliessend wird filtriert, drei mal mit Heptan gewaschen und im Vakuum getrocknet. Die Analyse des erhaltenen festphasigen Produkts (VI) – d.h. der Titan enthaltenden Katalysatorkomponente (1) – ergibt einen Gehalt an Titan von 2,06 Gewichtsprozent und an Chlor von 13,48 Gewichtsprozent.

Polymerisation:

0,205 Gewichtsteile der Titan enthaltenden Katalysatorkomponente (1) werden in 20 Gewichtsteilen Heptan suspendiert und mit 2,5 Gewichtsteilen $Al(C_2H_5)_3$ (2) versetzt.

Das so erhaltene Ziegler-Katalysatorsystem wird in einen Rührautoklaven gegeben, der mit 4000 Gewichtsteilen (entsprechend etwa 50% seines Fassungsvermögens) Isobutan beschickt ist. Sodann wird unter Rühren und bei den – jeweils durch Regelung konstant gehaltenen – Parametern: Äthylendruck = 20 bar, Wasserstoffdruck = 5 bar, Temperatur = 90 °C, über eine Zeitspanne von 2 Stunden polymerisiert, wonach die Polymerisation durch Entspannen des Autoklaven abgebrochen wird.

Nähere Angaben zu dem Verfahrensprodukt finden sich in der unten stehenden Tabelle.

**Beispiel 2**

Es wird gearbeitet wie in Beispiel 1, mit der Ausnahme, dass beim Herstellen der Titan enthaltenden Katalysatorkomponente (1) in Stufe (1.2) statt des Acetylchlorids die gleiche Molmenge Benzoychlorid eingesetzt wird.

Die resultierende Katalysatorkomponente (1) hat einen Gehalt an Titan von 2,0 Gewichtsprozent und an Chlor von 11,2 Gewichtsprozent; sie wird bei der Polymerisation in einer Menge von 0,352 Gewichtsteilen eingesetzt.

Zum erhaltenen Polymerisat vgl. die unten stehende Tabelle.

**Beispiel 3**

Es wird gearbeitet wie in Beispiel 1, mit der Ausnahme, dass beim Herstellen der Titan enthaltenden Katalysatorkomponente (1) in Stufe (1.2) wie folgt gearbeitet wird:

10 Gewichtsteile des in Stufe (1.1) gewonnenen festphasigen Zwischenprodukts (IV) werden in 35 Gewichtsteilen Heptan suspendiert, worauf diese Suspension bei einer Temperatur von 25 °C mit einer Lösung aus 7,0 Gewichtsteilen Monochloracetylchlorid in 35 Gewichtsteilen Heptan versetzt und das ganze 4 Stunden bei einer Temperatur von 25 °C gerührt wird. Anschliessend wird filtriert, drei mal mit Heptan gewaschen und im Vakuum getrocknet.

Die resultierende Katalysatorkomponente (1) hat einen Gehalt an Titan von 2,35 Gewichtsprozent und an Chlor von 12,04 Gewichtsprozent; sie wird bei der Polymerisation in einer Menge von 0,345 Gewichtsteilen eingesetzt.

Zum erhaltenen Polymerisat vgl. ebenfalls die unten stehende Tabelle.

**Beispiel 4**

Es wird gearbeitet wie in Beispiel 1, mit der Ausnahme, dass beim Herstellen der Titan enthaltenden Katalysatorkomponente (1) in Stufe (1.2) wie folgt gearbeitet wird:

10 Gewichtsteile des in Stufe (1.1) gewonnenen festphasigen Zwischenproduktes (IV) werden in 50 Gewichtsteilen Acetylchlorid suspendiert, worauf 4 Stunden bei einer Temperatur von 25 °C gerührt wird. Anschliessend wird filtriert, fünf mal mit Heptan gewaschen und im Vakuum getrocknet.

Die resultierende Katalysatorkomponente (1) hat einen Gehalt an Titan von 1,36 Gewichtsprozent und an Chlor von 8,82 Gewichtsprozent; sie wird bei der Polymerisation in einer Menge von 0,220 Gewichtsteilen eingesetzt.

Zum erhaltenen Polymerisat vgl. ebenfalls die unten stehende Tabelle.

**Beispiel 5**

Es wird gearbeitet wie in Beispiel 1, mit der Ausnahme, dass beim Herstellen der Titan enthaltenden Katalysatorkomponente (1) in Stufe (1.1) statt der 312 Gewichtsteile des dort verwendeten Magnesiumäthylats 280 Gewichtsteile Magnesiumphenolat eingesetzt werden.

Die resultierende Katalysatorkomponente (1) hat einen Gehalt an Titan von 1,35 Gewichtsprozent und an Chlor von 10,3 Gewichtsprozent; sie wird bei der Polymerisation in einer Menge von 0,33 Gewichtsteilen eingesetzt.

Zum erhaltenen Polymerisat vgl. die nachstehende Tabelle.

**Beispiel 6**

Es wird gearbeitet wie in Beispiel 1, mit der Ausnahme, dass beim Herstellen der Titan enthaltenden Katalysatorkomponente (1) in Stufe (1.1) statt der 312 Gewichtsteile des dort verwendeten Magnesiumäthylats 784 Gewichtsteile Magnesiumaluminiumäthylat der Formel $Mg[Al(OC_2H_5)_4]_2$ eingesetzt werden und als Alkohol statt Methanol Äthanol verwendet wird.

Die resultierende Katalysatorkomponente (1) hat einen Gehalt an Titan von 2,3 Gewichtsprozent und an Chlor von 11,08 Gewichtsprozent; sie wird bei der Polymerisation in einer Menge von 0,335 Gewichtsteilen eingesetzt.

Zum erhaltenen Polymerisat vgl. wiederum die nachstehende Tabelle.

**Tabelle**

| Bsp. | Ausbeute an Polyäthylen | Gramm Polyäthylen pro g Katal. | g Titan | Schüttgew. (g/l) | RT+) (sek.) | $MI_{2,16}$ (g/10 Min) | Cl im Polym. Gew.-ppm |
|---|---|---|---|---|---|---|---|
| 1 | 1 570 | 7 660 | 371 800 | 370 | 6,9 | 0,9 | 17,6 |
| 2 | 1 700 | 4 830 | 241 500 | 355 | 7,0 | 0,2 | 23,2 |
| 3 | 1 640 | 4 750 | 202 300 | 410 | 6,7 | 0,1 | 25,3 |
| 4 | 1 200 | 5 450 | 400 700 | 340 | 7,4 | 0,6 | 16,2 |
| 5 | 1 850 | 5 610 | 415 500 | 360 | 8,0 | 0,3 | 12,2 |
| 6 | 1 650 | 4 930 | 214 300 | 375 | 8,2 | 0,3 | 22,5 |

+) = Rieseltest, gemessen nach ASTM D 1895-67, Methode A

**Patentanspruch**

Verfahren zum Herstellen von Homo- und Copolymerisaten von $C_2$- bis $C_6$-α-Monoolefinen durch Polymerisation des bzw. der Monomeren bei Temperaturen von 30 bis 200 °C und Drücken von 0,1 bis 200 bar mittels eines Ziegler-Katalysatorsystems aus

(1) einer Titan enthaltenden Katalysatorkomponente und

(2) einer Metallverbindung der allgemeinen Formel

$$Me\ A_{m-n}\ X_n,$$

worin stehen

Me für die Metalle Aluminium, Magnesium bzw. Zink,

A für einen $C_1$- bis $C_{12}$-Kohlenwasserstoffrest,

X für Chlor, Brom, Jod bzw. Wasserstoff,

m für die Zahl der Wertigkeit des Metalls Me, und

n für eine Zahl von 0 bis m-1,

mit der Massgabe, dass das Atomverhältnis Titan aus der Katalysatorkomponente (1) : Metall (Me) aus der Katalysatorkomponente (2) im Bereich von 1 : 0,1 bis 1 : 500 liegt, dadurch gekennzeichnet, dass als Titan enthaltende Katalysatorkomponente (1) eingesetzt wird das festphasige Produkt (VI), das erhalten worden ist, indem man zunächst

(1.1) in einer ersten Stufe

(1.1.1) einen feinteiligen, porösen, anorganisch-oxidischen Stoff (I), der einen Teilchendurchmesser von 1 bis 1.000 µm, ein Porenvolumen von 0,3 bis 3 $cm^3/g$ sowie eine Oberfläche von 100 bis 1.000 $m^2/g$ besitzt und die Formel $SiO_2 \cdot aAl_2O_3$ – worin a steht für eine Zahl im Bereich von 0 bis 2 – hat, und

(1.1.2) eine Lösung (II), wie sie sich ergibt beim Zusammenbringen von

(IIa) 100 Gewichtsteilen eines Alkohols der allgemeinen Formel

$$Z{-}OH,$$

worin Z steht für einen gesättigten $C_1$- bis $C_8$-Kohlenwasserstoffrest,

(IIb) 0,01 bis 6 Gewichtsteilen (gerechnet als Titan eines Titantrihalogenids, wobei das Halogen Chlor und/oder Brom sein kann, sowie

(IIc) 0,01 bis 4 Gewichtsteilen (gerechnet als Magnesium) einer in dem Alkohol (IIa) löslichen Magnesiumverbindung aus der Reihe der

(A) Magnesiumalkoholate mit den Formeln

$$Mg(OD)_2,$$

$$MgX(OD) \text{ bzw.}$$

$$Mg_w[E_{k.x}(OD)_y]_z,$$

worin stehen

D für einen einwertigen $C_1$- bis $C_{10}$-Kohlenwasserstoffrest gesättigt-aliphatischer und/oder aromatischer Natur,

X für Chlor, Brom oder Jod,

E für das Element Lithium, Bor, Aluminium oder Titan,

w für eine ganze Zahl im Bereich von 1 bis 6,

k für die Zahl der Wertigkeit des Elements E,

x für eine ganze Zahl im Bereich von 1 bis 4,

y für k.x + 1

1 für eine ganze Zahl im Bereich von 1 bis 5, und

z für 2w:(y-k.x);

oder

(B) Magensiumcarboxylate mit der Formel

$$Mg(OCOD')_2,$$

worin D' steht für einen einwertigen $C_1$- bis $C_{18}$-Kohlenwasserstoffrest gesättigt-aliphatischer und/oder aromatischer Natur;

oder

(C) Magnesiumsalze von CH-aciden Verbindungen,

miteinander in Berührung bringt unter Bildung einer Suspension (III), mit der Massgabe, dass das Gewichtsverhältnis anorganisch-oxidischer Stoff (I) : Titan in dem Titantrihalogenid (IIb) im Bereich von 1 : 0,01 bis 1 : 0,2 und das Gewichtsverhältnis anorganisch-oxidischer Stoff (I) : Magnesium in der Magnesiumverbindung (IIc) im Bereich von 1 : 0,01 bis 1 : 0,25 liegt; die Suspension (III) bei einer Temperatur, die unterhalb von 200 °C und oberhalb des Schmelzpunktes des verwendeten Alkohols (IIa) liegt, bis zur trockenen Konsistenz – Bildung eines festphasigen Zwischenproduktes (IV) – eindampft, und dann

(1.2) in einer zweiten Stufe

(1.2.1) das aus Stufe (1.1) erhaltene festphasige Zwischenprodukt (IV) und

(1.2.2) ein – gegebenenfalls in einem organischen Lösungsmittel gelöstes – Acylhalogenid (V) der allgemeinen Formel

$$D''\text{–CO–}X$$

worin stehen

D'' für einen gesättigten $C_1$- bis $C_{18}$-Kohlenwasserstoffrest – mit der Massgabe, dass in dem genannten Rest bis zu 3 Wasserstoffatome durch Cl bzw. Br substituiert sein können – und

X für F, Cl, Br bzw. J,

miteinander in Berührung bringt unter Bildung einer Suspension, mit der Massgabe, dass das Molverhältnis Titan aus dem festphasigen Zwischenprodukt (IV) : Acylhalogenid (V) im Bereich von 1 : 0,01 bis 1 : 100 liegt; – wobei das dabei als Suspendiertes resultierende festphasige Produkt (VI) die Titan enthaltende Katalysatorkomponente (1) ist.

**Revendication**

Procédé de préparation d'homo- et de co-polymères d'-α-mono-oléfines en $C_2$ à $C_6$ par polymérisation d'un monomère ou de monomères à des températures de 30 à 200 °C et sous des pressions de 0,1 à 200 bars en présence d'un système catalytique selon Ziegler, constitué de:

(1) une composante catalytique contenant du titane et

(2) un composé de métal de la formule générale

$$Me\ A_{m-n}\ X_n,$$

dans laquelle

Me représente les métaux aluminium, magnésium ou zinc,

A désigne un reste hydrocarboné en $C_1$ à $C_{12}$,

X représente un atome de chlore, de brome, d'iode ou d'hydrogène,

m correspond à la valence du métal Me et

n est un nombre de 0 à m-1,

avec la condition que le rapport des atomes de titane de la composante catalytique (1) aux atomes de métal (Me) de la composante catalytique (2) est compris entre 1 : 0,1 et 1 : 500, caractérisé en ce que la composante catalytique au titane (1) utilisée est le produit à phase solide (VI) obtenu en mettant en contact:

(1.1) dans un premier stade:

(1.1.1) une matière inorganique-oxydique (I) poreuse de la formule $SiO_2 \cdot aAl_2O_3$, où a est un nombre de 0 à 2, en fines particules d'une granulométrie de 1 à 1000 µm avec une surface de 100 à 1000 $m^2/g$ et un volume de pores de 0,3 à 3 $cm^3/g$, avec

(1.1.2) une solution (II) obtenue par mélange de:

(IIa) 100 parties en poids d'un alcool de la formule générale

$$Z\text{–OH},$$

dans laquelle Z représente un reste hydrocarboné saturé en $C_1$ à $C_8$;

(IIb) 0,01 à 6 parties en poids (calculées comme titane) d'un trihalogénure du titane, l'halogène pouvant être le chlore et(ou) le brome;

(IIc) 0,01 à 4 parties en poids (calculées comme magnésium) d'un dérivé du magnésium soluble dans l'alcool (IIa), choisi parmi:

(A) les alcoolates de magnésium de l'une des formules

$$Mg(OD)_2,$$

$$Mg\ X\ (OD)$$

$$\text{et } [Mg_wE_{k.x}(OD)_y]_z,$$

dans lesquelles

D désigne un reste hydrocarboné monovalent en $C_1$ à $C_{10}$ de nature aliphatique saturée et(ou) aromatique

X représente un atome de chlore, de brome ou d'iode

E désigne un élément lithium, bore, aluminium ou titane

w est un nombre entier valant de 1 à 6

k correspond à la valence de l'élément E

x est un nombre entier valant de 1 à 4

$y = k.x + 1$ où

1 est un nombre entier valant de 1 à 5 et

$z = 2w : (y - k.x)$;

(B) les carboxylates de magnésium de la formule

$$Mg(OCOD')_2,$$

dans laquelle

D' représente un reste hydrocarboné monovalent en $C_1$ à $C_{18}$ de nature aliphatique saturée et(ou) aromatique;

(C) les sels de magnésium de composés à groupe CH-acide,

pour former une suspension (III), avec la condition que les proportions pondérales de la matière inorganique-oxydique (I) et du titane dans le trihalogénure de titane (IIb) sont dans un rapport entre 1 : 0,01 et 1 : 0,2 et les proportions pondérales de la matière inorganique-oxydique (I) et du magnésium dans le dérivé magnésien (IIc) dans un rapport entre 1 : 0,01 et 1 : 0,25; la suspension (III) étant ensuite évaporée à une température inférieüre à 200 °C et supérieure au point de fusion de l'alcool (IIa) utilisé jusqu'à une consistance sèche et la formation d'un produit intermédiaire à phase solide (IV), puis

(1.2) dans un deuxième stade:

(1.2.1) le produit intermédiaire à phase solide (IV) obtenu dans le stade (1.1) avec

(1.2.2) un halogénure d'acyle (V) – éventuellement dissous dans un solvant organique – de la formule générale

$$D''\text{-}CO\text{-}X,$$

dans laquelle

D'' représente un reste hydrocarboné saturé en $C_1$ à $C_{18}$, dans lequel jusqu'à trois atomes d'hydrogène peuvent être remplacés par des atomes de chlore ou de brome, et

X désigne du fluor, du chlore, du brome ou de l'iode, pour former une suspension, avec la condition que le rapport molaire du titane dans le produit intermédiaire à phase solide (IV) à l'halogénure d'acyle (V) est compris entre 1 : 0,01 et 1 : 100,

le produit à phase solide (VI) obtenu en suspension constituant la composante catalytique au titane (1).

**Claim**

A process for the production of homopolymers and copolymers of $C_2$-$C_6$-monoolefins by polymerization of the monomer(s) at a temperature of from 30° to 200 °C and a pressure of from 0.1 to 200 bar using a Ziegler catalyst system consisting of

(1) a titanium-containing catalyst component and

(2) a metal compound of the general formula

$$Me\ A_{m-n}X_n$$

where

Me is the metal aluminium, magnesium or zinc,

A is a $C_1$-$C_{12}$-hydrocarbon radical,

X is chlorine, bromine, iodine or hydrogen,

m is the number of the valency of the metal Me, and

n is a number form 0 to m-1,

with the proviso that the atomic ratio of titanium form catalyst component (1) to metal (Me) from catalyst component (2) is from 1 : 0.1 to 1 : 500, characterized in that there is used as titanium-containing catalyst component (1) the solide-phase product (VI) which has been obtained by bringing into contact with one another, with the formation of a suspension (III),

(1.1) in a first stage

(1.1.1) a pariculate, porous, inorganic oxidic material (I) exhibiting a particle diameter of from 1 to 1000 µm, a pore volume of from 0.3 to 3 $cm^3/g$ and a surface area of from 100 to 1000 $m^2/g$, and having the formula $SiO_2 \cdot aAl_2O_3$, where a is a number from 0 to 2, and

(1.1.2) a solution (II) formed by combining

(IIa) 100 parts by weight of an alcohol of the general formula

$$Z\text{–}OH$$

where Z is a saturated $C_1$-$C_8$-hydrocarbon radical,

(IIb) 0.01 to 6 parts by weight (calculated as titanium) of a titanium trihalide, it being possible for the halogen to be chlorine and/or bromine, and

(IIc) 0.01 to 4 parts by weight (calculated as magnesium) of a magnesium compound soluble in the alcohol (IIa) and selected from the series of

(A) magnesium alcoholates of the formulae $Mg(OD)_2$, $MgX(OD)$ and $Mg_w[E_{k.x}(OD)_y]_z$ where

D is a monovalent $C_1$-$C_{10}$-hydrocarbon radical of saturated aliphatic and/or aromatic nature,

X is chlorine, bromine or iodine,

E is the element lithium, boron, aluminium or titanium,

w is an integer from 1 to 6,

k ist the number of the valency of the element E,

x is an integer from 1 to 4,

y is $k.x + 1$,

1 is an integer from 1 to 5, and

z is $2w:(y-k.x)$;

or

(B) magnesium carboxylates of the formula

$$Mg(OCOD')_2$$

where D' is a monovalent $C_1$-$C_{18}$-hydrocarbon radical of saturated aliphatic and/or aromatic nature;

or

(C) magensium salts of CH-acidic compounds,

with the proviso that the weight ratio of inorganic oxidic material (I) to titanium in the titanium trihalide (IIb) is from 1 : 0.01 to 1 : 0.2 and the weight ratio of inorganic oxidic material (I) to magnesium in the magnesium compound (IIc) is from 1 : 0.01 to 1 : 0.25; the suspension (III) is evaporated, at a temperature below 200 °C and above the melting point of the alcohol (IIa) used, to dry consistency, a solid-phase intermediate product (IV) thus being formed,

and then by bringing into contact with one another, with the formation of a suspension,

(1.2) in a second stage

(1.2.1) the solid-phase intermediate product (IV) obtained from step (1.1), and

(1.2.2) an acyl halide (V), optionally dissolved in an organic solvent, of the general formula

D''–CO–X

where

D'' is a saturated $C_1$-$C_{18}$-hydrocarbon radical, with the proviso that up to 3 hydrogen atoms in the said radical can be substituted by chlorine or bromine, and

X is F, Cl, Br or I, with the proviso that the molar ratio of titanium from the solid-phase intermediate product IV to acryl halide (V) is from 1 : 0.01 to 1 : 100,

the solid-phase product VI thus obtained as suspended material being the titanium-containing catalyst component (1).